(19) Europäisches Patentamt
European Patent Office
Office européen des brevets

(11) Publication number: **0 037 706**
**B1**

(12) # EUROPEAN PATENT SPECIFICATION

(45) Date of publication of patent specification: **05.03.86**

(51) Int. Cl.$^4$: **C 08 G 12/28** // C08K5/34

(21) Application number: **81301417.2**

(22) Date of filing: **01.04.81**

(54) **Condensation product prepared from N,N'-ethyleneurea and formaldehyde.**

(30) Priority: **03.04.80 IT 2116580**

(43) Date of publication of application:
**14.10.81 Bulletin 81/41**

(45) Publication of the grant of the patent:
**05.03.86 Bulletin 86/10**

(84) Designated Contracting States:
**BE DE FR GB IT NL**

(56) References cited:
**DE-A-2 723 877**
**DE-A-2 844 132**
**GB-A-1 099 799**
**US-A-3 004 002**

(73) Proprietor: **Montedison S.p.A.**
**Patents & Licensing Dept. Foro Buonaparte, 31**
**P.O. Box 10528**
**I-20121 Milan (IT)**

(72) Inventor: **Cicchetti, Osvaldo**
**57, Via Sapri**
**Milan (IT)**
Inventor: **Fontani, Spartaco**
**29, Via Dezza**
**Milan (IT)**
Inventor: **Landoni, Gianluigi**
**2/A, Via Savona**
**Milan (IT)**
Inventor: **Locatelli, Renato**
**11, Via A. Meucci**
**Ferrara (IT)**
Inventor: **Bertelli, Guido**
**56, Via Rosa Angelini**
**Ferrara (IT)**
Inventor: **Roma, Pierpaolo**
**301, Via Bologna**
**Ferrara (IT)**

(74) Representative: **Whalley, Kevin et al**
**Marks & Clerk 57/60 Lincoln's Inn Fields**
**London WC2A 3LS (GB)**

EP 0 037 706 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to a new condensation product prepared from N,N'-ethyleneurea and formaldehyde and having particular characteristics.

Belgian patent No. 855,122 describes self-extinguishing polymeric compositions containing, as a flame-retardant additive, a mixture of an ammonium phosphate and a nitrogen containing compound selected from a group of compounds which includes a product of condensation between N,N'-ethyleneurea and formaldehyde.

Such compositions have, on the one hand, excellent flame-retardant properties, but exhibit, on the other, a low resistance to heat and thermo-oxidation. In fact, in the molding of manufactured articles at temperatures higher than 200°C, the polymeric compositions undergo colour changes with gradual turning from white to light hazel, dark hazel and finally brown, and furthermore the specimens obtained from such compositions and maintained for a certain time period at high temperatures in a forced draught furnace lose their inflammability after a certain number of days (the oxygen index decreases from 30 to less than 25) and become brittle even if they have been prepared from antioxidant-containing polymeric compositions.

The present invention aims to provide a solid and water-insoluble condensation product of N,N'-ethyleneurea and formaldehyde, of the type described in Belgian patent No. 855,122, but not causing or causing only slightly the above mentioned drawbacks when it is added to a polymer, in particular a polyolefin, in combination with ammonium phosphate.

We are also aware of US-A-3004002 which relates to homopolymers obtained by heating dimethylol-2-imidazolidone (or dimethylolethylene urea) or dimethylol-2-imidazolithione (or dimethylol ethylene thiourea) in the presence of an acid catalyst. The degree of polymerization is controlled by varying time, temperature and pH of the reaction. Such polymers are suitable for use as recrystallization retarders in soluble vat dye printing compositions, and as thinning or dispersing agents for highly concentrated dispersions.

We are further aware of DE-A-2844132 and DE-A-2723877, both of which disclose the use of high molecular weight water-insoluble N,N'-ethyleneurea-formaldehyde condensation products in flame retardant polymer compositions.

Accordingly, the present invention provides a solid and water-insoluble condensation product of N,N'-ethyleneurea and formaldehyde, having the structure:

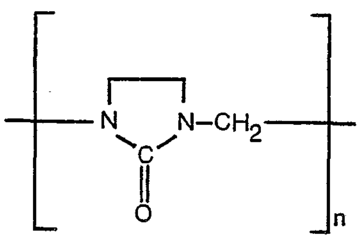

wherein n is an integer from 20 to 60 having a mean value of 41, and having an average number molecular weight $\overline{M}_n$ ranging from 2000 to 6000, the product being characterized by being prepared by reacting in an aqueous medium, under stirring, equimolar amounts of N,N'-ethyleneurea and formaldehyde, at a pH of about 2 and at a temperature ranging from 0° to 40°C; or by reacting in an organic solvent N,N'-ethyleneurea and formaldehyde, at a temperature ranging from 10° to 70°C.

The above structure is confirmed by NMR analysis. On X-ray analysis the product preferably exhibits a pattern characteristic of a prevailingly amorphous substance.

With respect to the condensation product of N,N'-ethyleneurea with formaldehyde described in Belgian patent No. 855,122, the product according to the present invention offers the following advantages:

— a higher resistance to heat and to thermo-oxidation;

— a higher degree of polycondensation;

— lower percentages of low molecular weight fractions which, as is known, are more thermo-oxidizable;

— a lower degree of crystallinity which permits, among other things, an easier mixing with the polymeric matrix;

— a lower degree of hygroscopicity and of electrostaticity.

The new condensation product according to the invention can be prepared by reacting in an aqueous medium, under stirring, equimolar amounts of N,N'-ethyleneurea and formaldehyde, at a pH of about 2 and at a temperature ranging from 0° to 40°C, preferably from 25° to 30°C. The formaldehyde can be added in any manner, provided the temperature remains in the abovesaid range.

Condensation can be also carried out in an organic solvent, and in such a case the reaction is effected at a temperature ranging from 10° to 70°C. Suitable organic solvents for this purpose are formic acid, acetic acid, methylene chloride, chloroform, fluoroalcohols or mixtures of such compounds.

The above preparation methods are different from those described in the literature and from the one reported in Belgian patent No. 855,122.

The invention will be further described with reference to the following illustrative Examples, which describe the condensation of N,N'-ethyleneurea with formaldehyde. The products according to the present invention are the ones of examples 4, 5 and 8; the other examples are given for comparative purposes.

Example 1

This example illustrates, for comparative purposes, the preparation of a condensation product of N,N'-ethlyleneurea with formaldehyde according to the method described in Belgian patent No. 855,122. N,N'-ethyleneurea was dissolved in water in an amount corresponding to 50 g/liter, acidified with dilute sulphuric acid to pH value of 2, and heated to 90°C, whereupon an aqueous solution of formaldehyde (37% by weight) was dropped into the ethyleneurea solution maintained at 90°C and under intense stirring, until a molar ratio of $CH_2O$: ethyleneurea equal to 2 was obtained. The finely particled precipitate so obtained was filtered, washed with water and dried.

Example 2

Condensation at pH = 2 and at 75°C.

A solution prepared by dissolving 95 g of N,N'ethylene-urea in the form of hemihydrated crystals (1 mol) in 600 ml of deionized water was introduced into a 1-liter glass flask equipped with a stirrer and a thermometer and immersed in a water bath. The solution was acidified with concentrated sulphuric acid to pH = 2 and 87 g of aqueous formaldehyde (35% by weight; 1 mol) were dropped into the solution. The resulting reaction mixture was heated at 75°C under stirring for 8 hours, then was allowed to cool down to room temperature; it was then filtered and the cake was washed with water to neutrality. 94 g of product, corresponding to a yield of about 96% with respect to the theoretical value, were obtained.

Example 3

Condensation at 75°C in aqueous HCl (18% by weight).

A solution prepared by dissolving 95 g of N,N'-ethyleneurea in the form of hemihydrated crystals (1 mol) in 400 ml of aqueous HCl (18% by weight) was introduced into a flask like the one of example 2. There were then added thereto 87 g of aqueous formaldehyde (35% by weight; 1 mol) and the resulting reaction mixture was heated under stirring at 75°C for 8 hours, then was allowed to cool down to room temperature, to obtain an easily filterable product. After filtration the cake was washed with water to neutrality. 91.1 g of a crystalline condensation product corresponding to a yield of about 93% were obtained.

Example 4

Preparation of the product according to the invention, designated by "MF 80".

A solution prepared by dissolving 95 g of N,N'-ethyleneurea in the form of hemihydrated crystals (1 mol) in 600 ml of deionized water was introduced into a flask like that of example 2. The solution was acidified with concentrated sulphuric acid to pH = 2, whereupon 87 g of aqueous formaldehyde at (35% by weight; 1 mol) were added to the solution, and the reaction mixture was subjected to stirring, operating in such a manner as to keep the temperature at about 25°C without exceeding 30°C and reacting for 48 hours. The reaction mixture was then neutralized with an aqueous NaOH solution and filtered; after washing with water the cake was squeezed and dried at 110°C. A condensation product in the form of a white powder having a weight of 94.2 g, corresponding to a yield of 96% was obtained.

Example 5

Condensation at pH = 2 and at 5°C.

A solution prepared by dissolving 380 g (4 mol) of N,N'-ethyleneurea in the form of hemihydrated crystals in 3600 ml of deionized water was introduced into a 5-liter glass reactor equipped with a thermometer, a stirrer and an automatic thermoregulator. The solution was acidified with concentrated sulphuric acid up to pH = 2, cooled down to 5°C under stirring, and 348 g of an aqueous formaldehyde solution (35% by weight; 4 mol) were introduced by dropping, over 1 hour. The mixture was reacted at 5°C for 55 hours, after which it was filtered at the same temperature. The cake was washed with water to neutrality, and was squeezed and dried at 115°C. 340.6 g of product, corresponding to a yield of 86.9%, were obtained.

Example 6

Condensation at pH = 2 and at 60°C.

A solution prepared by dissolving 380 g (4 mol) of N,N'-ethyleneurea in the form of hemihydrated crystals in 3600 ml of deionized water was introduced into a 5-liter glass reactor equipped with an agitator, a thermometer and a water bath. The solution was acidified with concentrated sulphuric acid to pH = 2. 375 g of an aqueous formaldehyde solution (32% by weight; 4 mol) were added and the reaction mixture was heated under stirring at 60°C for 8 hours, and then allowed to cool down to room temperature. Upon filtration, a cake was obtained which was washed with water to neutrality and dried. 353 g of product, corresponding to a yield of 90%, were obtained.

Example 7

Condensation at pH = 4 and at 100°C.

A solution obtained by dissolving 190 g (2 mol) of N,N'-ethyleneurea in the form of hemihydrated crystals in 1800 ml of deionized water was introduced into a 3-liter glass flask equipped with an agitator, a thermometer, a reflux cooler and an oil heating bath. The solution was acidified with concentrated sulphuric acid to pH = 4. 187.5 g of an aqueous formaldehyde solution (32% by weight; 2 mol) were added and the reaction mixture was heated at 100°C for 27 hours, and then allowed to cool down to room temperature. The product was filtered, washed with water to neutrality and dried. 90.2 g of product, corresponding to a yield of about 46%, were obtained

Example 8

Condensation at 60°C in an organic solvent.

Into a 2-liter glass reactor, equipped with an agitator, a reflux cooler, a modified Markusson separator, a thermometer and a water bath, were introduced the following:

86 g (1 mol) of N,N'-ethyleneurea anhydrified through melting under vacuum;
30 g of trioxane (1 mol $CH_2O$);
800 ml of chloroform;
200 ml of glacial acetic acid;
1 g of p-toluene-sulphonic acid.

The reaction mixture was heated under reflux (60°C) until water no longer formed in the separator. Finally, chloroform and acetic acid were removed at reduced pressure.

The residual solid mass was washed with water to neutrality and then dried at 110°C.

76.4 g of product, corresponding to a yield of about 78%, were obtained. The chemical-physical characteristics of the condensation products prepared in the examples are indicated in the following Table I. The intrinsic viscosity was determined at 25°C using as a solvent an azeotropic mixture of $CHCl_3/CH_3OH$ in a weight ratio of 87:13. The average molecular weight $\overline{M}_n$ was determined according to the osmometric method and employing the same solvent. The crystallographic analysis was carried out by X-ray spectrum on powder.

TABLE I

Chemical-physical properties of the condensation products prepared in the examples

| Example | Thermogravimetric analysis in air, 20°C/min. | Differential calorimetric analysis in air, 10°C/min. | $\eta$ dl/g | Molecular weight $\overline{M}_n$ | Crystallographic analysis |
|---|---|---|---|---|---|
| 1 | $T_1$ = 252°C<br>$T_5$ = 288°C<br>$T_{10}$ = 304°C<br>$T_{50}$ = 350°C | Oxidation: weak exo peak at 252°C main exo peak at 307°C | $7.34 \times 10^{-2}$ | 1055 | — |
| 2 | $T_1$ = 257°C<br>$T_5$ = 288°C<br>$T_{10}$ = 301°C<br>$T_{50}$ = 342°C | — | $5.08 \times 10^{-2}$ | 757 | — |
| 3 | $T_{10}$ = 312°C<br>$T_{50}$ = 346°C | — | $3.64 \times 10^{-2}$ | 561 | Substantially crystalline |
| 4 | $T_1$ = 287°C<br>$T_5$ = 303°C<br>$T_{10}$ = 353°C<br>$T_{50}$ = 380°C | Oxidation: only one exo peak at 305°C | $32.62 \times 10^{-2}$ | 4048 | Weakly crystalline or having an amorphous content greater than 50% |
| 5 | — | — | $17.76 \times 10^{-2}$ | 2340 | — |
| 6 | — | — | $8.02 \times 10^{-2}$ | 1142 | — |
| 7 | — | — | $11.34 \times 10^{-2}$ | 1560 | — |
| 8 | — | — | $26.5 \times 10^{-2}$ | 3360 | — |

To obtain a self-extinguishing polymeric composition having improved stabilities to heat and to thermo-oxidation, an ammonium phosphate and a nitrogen containing condensation product according to the invention were added to a thermoplastic polymer (in particular a polyolefin) in amounts of 10—20 parts and 5—8 parts respectively per 100 parts by weight of the total composition.

Good results are also achieved by employing, instead of the condensation product according to the invention, a mixture thereof with minor amounts of a condensation product of N,N'-ethyleneurea with formaldehyde having a molecular weight lower than 2000 but being crystalline.

Amongst the various suitable phosphates the preferred ones are the ammonium polyphosphates comprised in the general formula $(NH_4)_{n+2} P_n O_{3n+1}$, wherein n is an integer equal to or higher than 2, the molecular weight of the polyphosphates having to be high enough ($400 \leq n \leq 800$) to ensure a low solubility in water. The crystalline form of the ammonium polyphosphates which, as is known (JACS, 91:1 — 1.1.1969), can be of five types, should be prevailingly of type II, in order to further increase the thermal stability of the N,N'-ethyleneurea/$CH_2O$-polyphosphate combination. Other types of utilizable phosphates are those deriving from amines, such as for example dimethyl ammonium phosphate or diethyl ammonium phosphate, ethylenediamine phosphate, or melamine ortho- or pyrophosphate. The thermal stability characteristics of N,N'-ethyleneurea/$CH_2O$-polyphosphate mixtures in the weight ratio 2 : 5 are indicated in the following Table II.

The condensation products employed were the products described in examples 1 and 4, while the ammonium polyphosphate (APP) was the one sold by Farbwerke Hoechst under the trade name "Exolit 252". The comparison illustrates the higher thermal stability of the mixture containing the condensation product of example 4 according to the invention.

TABLE II

| | Product of example 1 | Product of example 4 |
|---|---|---|
| Thermogravimetric | $T_1$ = 220°C | $T_1$ = 257°C |
| analysis in air, | $T_5$ = 244°C | $T_5$ = 279°C |
| 20°C/min. | $T_{10}$ = 258°C | $T_{10}$ = 287°C |

The evaluation and comparison of the stability to thermo-oxidation of the polymeric compositions containing, as flame-proofing additives, the condensation products described in examples 1 and 4, may be operated according to any known method. For example, the finely ground powders of ammonium polyphosphate, of the condensation product of example 1 or 4, and of other additives, if any, are first intimately mixed. A thermoplastic polymer is then added, in a turbomixer, to the mixture in order to form a homogeneous mixture which is extruded and granulated.

Using the granulated product so obtained, sheets having a thickness of 3.2 mm (1/8 inch) are molded in a MOORE plate press, operating for 7 minutes at a pressure of 40 Kg/cm$^2$ amd at a suitable temperature. The degree of fire resistance is determined on the sheets so obtained by measuring the oxygen index (0.1.) according to the standard ASTM D-2863, and the other evaluations recorded in the following Table III are made as well.

The thermoplastic polymer employed was an isotactic polypropylene in the form of flakes and having a melt flow index equal to 12 g/10 min.

From a comparison between the results obtained with a combination containing the two different flame retardant additives it is clearly apparent that the additive of example 4 according to the invention is superior to the one of example 1 prepared as described in Belgian Patent No. 855,122.

TABLE III

Oxygen index (O.I.) and chromatic variations of specimens during ageing in a forced draught furnace at 150°C.

| Time in days | 0 | | 30 | | 55 | |
|---|---|---|---|---|---|---|
| | O.I. | Colour | O.I. | Colour | O.I. | Colour |
| Formulation containing the condensation product of example 1* | 30.0 | Light hazel | 25.0 | Black | 20.0 | Black |
| Formulation containing the condensation product of example 4* | 30.0 | White | 27.5 | Hazel tending to brown | 26.0 | Black |

(*) Specimens molded at 230°C were used.

Composition of the formulations:

| Components | Parts by weight |
|---|---|
| Polypropylene | 77.3 |
| Product of example 1 or 4 | 6.0 |
| Ammonium polyphosphate ("Exolit 263") | 15.0 |
| Tetra [3-(3,5-di-t-butyl-4-hydroxyphenyl)propionate] of pentaerythritol | 0.2 |
| Dilauryl thiodipropionate | 0.4 |
| 2,6-di-t-butyl-p-cresol | 0.1 |
| Basic Magnesium carbonate | 1.0 |

**Claims**

1. A solid and water-insoluble condensation product of N,N'-ethylene-urea and formaldehyde having the structure:

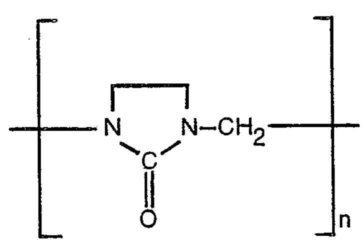

wherein n is an integer from 20 to 60 having a mean value of 41, and an average number molecular weight $\overline{M}_n$ ranging from 2000 to 6000, the said product being characterized by being prepared by reacting in an aqueous medium, under stirring, equimolar amounts of N,N'-ethyleneurea and formaldehyde, at a pH of about 2 and at a temperature ranging from 0° to 40°C.

2. A solid and water-insoluble condensation product of N,N'-ethyleneurea and formaldehyde having the structure:

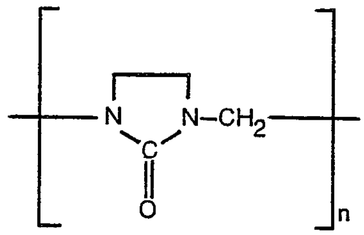

wherein n is an integer from 20 to 60 having a mean value of 41, and an average number molecular weight $\overline{M}$ 0.247 ranging from 2000 to 6000, the said product being characterized by being prepared by reacting in an organic solvent N,N'-ethyleneurea and formaldehyde, at a temperature ranging from 10° to 70°C.

3. A product as claimed in claims 1 or 2, characterized in that it exhibits, under X-ray analysis, the spectrum of a prevailingly amorphous substance.

**Patentansprüche**

1. Festes und wasserunlösliches Kondensationprodukt aus N,N'-Ethylenharnstoff und Formaldehyd mit der Struktur

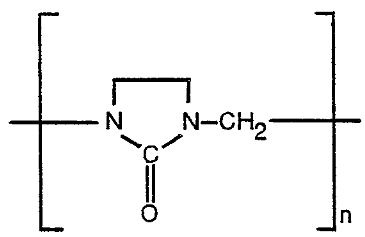

worin n eine ganze Zahl von 20 bis 60 und einem durchschnittlichen Wert von 41 ist, und einem Zahlenmittel des Molekulargewichts $\overline{M}_n$ im Bereich von 2000 bis 6000, das dadurch gekennzeichnet ist, daß es durch Umsetzung äquimolarer Mengen an N,N'-Ethylenharnstoff und Formaldehyd bei einem pH von etwa 2 und einer Temperatur im Bereich von 0 bis 40°C unter Rühren in einem wässrigen Medium hergestellt worden ist.

2. Festes und wasserunlösliches Kondensationsprodukt aus N,N'-Ethylenharnstoff und Formaldehyd mit der Struktur

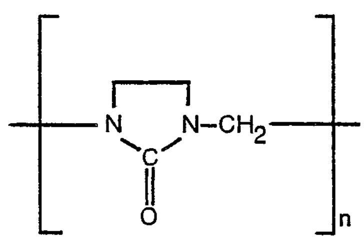

worin n eine ganze Zahl von 20 bis 60 mit einem durchschnittlichen Wert von 41 ist, und einem Zahlenmittel des Molekulargewichtes $\overline{M}_n$ im Bereich von 2000 bis 6000, das dadurch gekennzeichnet ist, daß es durch Umsetzung von N,N'-Ethylenharnstoff und Formaldehyd bei einer Temperatur im Bereich von 10 bis 70°C in einem organischen Lösungsmittel hergestellt worden ist.

3. Produkt nach Anspruch 1 oder 2, dadurch gekennzeichnet, daß es bei der Röntgenanalyse das Spektrum einer überwiegend amorphen Substanz zeigt.

**Revendications**

1. Produit de condensation solide et insoluble dans l'eau de N,N'-éthylène-urée et formaldéhyde ayant la structure:

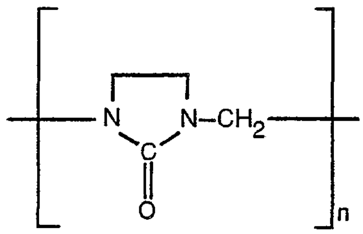

dans laquelle n représente un nombre entier compris entre 20 et 60 et dont la valeur moyenne est de 41, son poids moléculaire moyen $\overline{M}_n$ étant compris entre 2000 et 6000, ce produit étant caractérisé en ce qu'on le prépare par réaction dans un milieu aqueux sous agitation, de quantités équimoléculaires de N,N'-éthylène-urée et de formaldéhyde à un pH d'environ 2 et à une température comprise entre 0°C et 40°C.

2. Produit de condensation solide et insoluble dans l'eau de N,N'-éthylène-urée et de formaldéhyde ayant la structure:

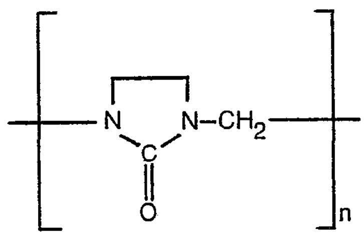

dans laquelle n représente un nombre entier compris entre 20 et 60 et dont la valeur moyenne est de 41, son poids moléculaire moyen $\overline{M}_n$ étant compris entre 2000 et 6000, ce produit étant caractérisé en ce qu'on le prépare par réaction dans un solvant organique de N,N'-éthylène-urée et de formaldéhyde à une température comprise entre 10 et 70°C.

3. Produit selon l'une quelconque des revendications 1 ou 2, caractérisé en ce qu'il présente par analyse aux rayons-X le spectre d'une substance en majorité amorphe.